# EUROPÄISCHE PATENTSCHRIFT

(11) **EP 2 692 201 B1**
(45) Veröffentlichungstag und Bekanntmachung des Hinweises auf die Patenterteilung: **30.08.2017**
(21) Anmeldenummer: 12714843.5
(22) Anmeldetag: 09.03.2012
(51) Int. Cl.: H05B 3/74, C03C 17/36, A47B 77/08, C03C 23/00

(54) **KOCHFELDPLATTE SOWIE KOCHFELD MIT EINER ENTSPRECHENDEN KOCHFELDPLATTE**
HOT PLATE AND HOB COMPRISING A CORRESPONDING HOT PLATE
TABLE DE CUISSON ET PLAN DE CUISSON ÉQUIPÉ D'UNE TABLE DE CUISSON CORRESPONDANTE

(30) Priorität: 30.03.2011 ES 201130483 P
(43) Veröffentlichungstag der Anmeldung: 05.02.2014
(73) Patentinhaber: BSH Hausgeräte GmbH, 81739 München (DE)
(72) Erfinder: ALONSO ESTEBAN, Rafael, E-22004 Huesca (ES); BUÑUEL MAGDALENA, Miguel Angel, E-50017 Zaragoza (ES); CARRETERO CHAMARRO, Enrique, 50003 Zaragoza (ES); ESTER SOLA, Francisco Javier, E-50001 Zaragoza (ES); PELAYO ZUECO, Francisco Javier, E-50008 Zaragoza (ES); PEREZ CABEZA, Pilar, E-50008 Zaragoza (ES); PLANAS LAYUNTA, Fernando, E-50009 Zaragoza (ES); SUBIAS DOMINGO, Jesus Mario, E-50008 Zaragoza (ES); VILLUENDAS YUSTE, Francisco, E-50009 Zaragoza (ES)
(86) Internationale Anmeldenummer: PCT/IB2012/051106
(87) Internationale Veröffentlichungsnummer: WO 2012/131510

(56) Entgegenhaltungen:
- WO-A1-2011/020718
- FR-A1- 2 885 995
- GB-A- 2 126 256
- US-B2- 7 718 929

## Beschreibung

Die Erfindung betrifft eine Kochfeldplatte mit einer Grundplatte, deren Unterseite eine Beschichtung mit metallischen Schichten und dielektrischen Schichten ausgebildet ist. Des Weiteren betrifft die Erfindung ein Kochfeld mit einer entsprechenden Kochfeldplatte.

Derartige Ausgestaltungen von Kochfeldplatten sind in unterschiedlichsten Ausführungen bekannt. Aus der US 7,718,929 B2 ist eine derartige Ausgestaltung bekannt. Dort ist die Beschichtung jedoch darauf beschränkt, dass die Anzahl der Schichten umfassend eine Antioxidations-Schutzschicht und eine Lichtabschirmschicht zwischen 2 und 4 beträgt. Bei derartigen Ausgestaltungen ist die Erzeugung von optischen Effekten betreffend den optischen Gesamteindruck der Kochfeldplatte eingeschränkt.

Aus der WO 2011/020718 A1 und aus der FR 2 885 995 A1 ist eine Kochfeldplatte bekannt, an deren Unterseite eine Beschichtung mit metallischen Schichten und dielektrischen Schichten ausgebildet ist.

Es ist Aufgabe der vorliegenden Erfindung, eine Kochfeldplatte zu schaffen, an deren Unterseite eine Beschichtung mit einer Mehrzahl von Schichten ausgebildet ist und dadurch eine vielfältigere Möglichkeit der optischen Effekte bezüglich der Farbdarstellung der Kochfeldplatte ermöglicht ist.

Diese Aufgabe, wird durch eine Kochfeldplatte, welche die Merkmale nach Anspruch 1 aufweist, und ein Kochfeld, welches die Merkmale nach Anspruchs 15 aufweist, gelöst.

Eine erfindungsgemäße Kochfeldplatte umfasst eine Grundplatte, an deren Unterseite eine Beschichtung mit metallischen Schichten und dielektrischen Schichten ausgebildet ist. Die Beschichtung ist mit zumindest zwei metallischen Schichten und zumindest zwei dielektrischen Schichten so ausgebildet, dass ein Reflexionsgrad der Kochfeldplatte <15% im Wellenlängenbereich zwischen 380nm und 780nm ist. In einer derartigen Ausgestaltung kann in besonders vorteilhafter und wirkungsvoller Weise eine Kochfeldplatte bereitgestellt werden, deren optischer Gesamteindruck metallisch schwarz erscheint. Durch die ganz spezifische Ausgestaltung der Beschichtung mit den jeweiligen Anzahlen der Schichten und deren optischen Eigenschaften bezüglich des Reflexionsgrads wird dieser optische Effekt erzielbar.

Vorzugsweise ist der Reflexionsgrad der Kochfeldplatte im Wellenlängenbereich zwischen 380nm und <400nm und zwischen >530nm und 780nm <10%. Der angesprochene optische Effekt bezüglich des metallisch schwarzen Eindrucks der Kochfeldplatte kann dadurch nochmals verbessert werden.

Vorzugsweise ist vorgesehen, dass die Beschichtung so ausgebildet ist, dass ein Transmissionsgrad der Kochfeldplatte im Wellenlängenbereich zwischen 380nm und 780nm <12%, insbesondere zwischen 0,5% und 10% ist.

Vorzugsweise ist vorgesehen, dass die Anzahl der metallischen Schichten 2 oder 3 beträgt.

Insbesondere ist vorgesehen, dass die Anzahl der dielektrischen Schichten zwischen 2 und 4 beträgt.

Es ist vorgesehen, dass die Beschichtung als unteren Abschluss eine Schutzschicht, insbesondere eine Antioxidations-Schutzschicht, aufweist.

Die Schichtenfolge ist insbesondere ausgehend von der Unterseite nach unten betrachtet zunächst beginnend mit einer dielektrischen Schicht, darauffolgend mit einer metallischen Schicht, darauffolgend wiederum mit einer dielektrischen Schicht und darauffolgend wiederum mit einer metallischen Schicht ausgebildet. Weitere dielektrische und metallische Schichten können folgen. Der nach unten hin untere Abschluss der Beschichtung wird dann durch die Schutzschicht gebildet.

Vorzugsweise ist vorgesehen, dass die metallischen Schichten und die dielektrischen Schichten jeweils Schichtdicken mit <=100 nm aufweisen.

Insbesondere ist vorgesehen, dass zumindest zwei metallische Schichten der Beschichtung unterschiedliche Schichtdicken und/oder zumindest zwei dielektrische Schichten der Beschichtung unterschiedliche Schichtdicken aufweisen. Dadurch kann eine äußerst große Palette an unterschiedlichen Farbgestaltungen auch sehr individuell und auch in Nuancen ermöglicht werden.

Vorzugsweise sind die Schichten der Beschichtung durch Sputtern auf der Unterseite ausgebildet, insbesondere durch ein Magnetronsputtern ausgebildet. Vorzugsweise ist vorgesehen, dass das Material eine metallische Schicht SSt ("Stainless Steel"; Edelstahl), Mo, Ni, Cr, Nd, V, Ti, Ta, Si, Al, W, Cu oder eine Verbindung von zumindest zwei der genannten Elemente aufweist.

Bezüglich des Materials einer dielektrischen Schicht ist vorzugsweise vorgesehen, dass dieses SnOₓ, ZnOₓ, TiOₓ, AlOₓ, SiOₓ, NbOₓ, TaOₓ, SiNₓ, AlNₓ, TiNₓ oder eine Verbindung von zumindest zwei der genannten Verbindungen aufweist.

Vorzugsweise ist vorgesehen, dass die Beschichtung eine erste dielektrische Schicht mit SnOₓ mit einer Schichtdicke von 46nm aufweist. Insbesondere ist auf diese erste dielektrische Schicht nach unten hin folgend eine erste metallische Schicht mit SSt als Material mit einer Schichtdicke von 8nm ausgebildet. Wiederum nach unten folgend ist dann eine zweite dielektrische Schicht mit SnOₓ mit einer Schichtdicke von 56nm ausgebildet, auf welche folgend eine zweite metallische Schicht mit SSt mit einer Schichtdicke von 33nm ausgebildet ist. Auf diese wiederum folgend ist eine dritte dielektrische Schicht mit SnOₓ mit einer Schichtdicke von 50nm ausgebildet. Diese besonders spezifizierte Ausführung der Beschichtungsausgestaltung gewährleistet in besonders hervorzuhebender Weise den metallisch schwarzen optischen Effekt der Kochfeldplatte.

Insbesondere ist die Grundplatte der Kochfeldplatte aus Glas oder Glaskeramik ausgebildet.

Die Beschichtung unter der Grundplatte weist eine Schichtdicke von vorzugsweise zwischen 10nm und 500nm auf.

Darüber hinaus kann vorgesehen sein, dass zusätzlich die Grundplatte der Kochfeldplatte bedruckt ist. Bedruckungen können dabei an der vorderen Stirnfläche oder an der Oberfläche der Grundplatte ausgebildet sein. Darüber hinaus können auch in der Grundplatte selbst Markierungen ausgebildet sein. Diese können beispielsweise mittels Laserlicht erzeugt sein. Mittels derartigen Bedruckungen können Schnittstellenbereiche bzw. Bedienfelder kenntlich gemacht werden. Darüber hinaus können auch Kochzonen entsprechend in ihren Umfangsbegrenzungen kenntlich gemacht werden. Bedruckungen können beispielsweise durch ein Siebdruckverfahren oder durch Lasermarkierung erfolgen. Mittels Laser können im Inneren der Grundplatte entsprechende Markierungen auch in unterschiedlichen Höhenniveaus ausgebildet werden. Weitere Möglichkeiten dazu sind in der DE 10 2006 017 250 A1 angegeben.

Eine nach unten hin ausgebildete Schutzschicht der Beschichtung kann auch durch einen Schutzüberzug erzeugt werden, der beispielsweise durch eine Farbe, Polymermaterial oder ein keramisches Material ausgebildet ist. Auch hier kann die Aufbringung durch eine Bedruckung oder ein Aufsprühen erfolgen. Derartige Bedruckungen werden vorzugsweise mit einer Dicke von einigen 100 µm ausgebildet.

Insbesondere durch die Aufbringung der Schichten der Beschichtung durch PVD (Physical Vapor Deposition) - Techniken wird ermöglicht, dass die Schichtdicken der einzelnen Schichten sehr genau erzeugt werden können und dadurch auch der visuelle optische Effekt bezüglich der Darstellung von Displayelementen, Leuchtmitteln, wie beispielsweise Lichtdioden, und Bilder, durch die Beschichtung erkannt werden können. Andererseits kann jedoch erreicht werden, dass darunter befindliche Mechanik und weitere gegenständliche Komponenten bei Blick auf die Kochfeldplatte von oben nicht erkannt werden können, wenn diese Kochfeldplatte in einem Kochfeld angeordnet ist. Durch eine derartige Ausgestaltung einer Beschichtung der Kochfeldplatte mit gegebenenfalls zusätzlicher Bedruckung kann erreicht werden, dass auch ein Flächenbereich, durch den die Bedienvorrichtung auf der Kochfeldplatte kenntlich gemacht ist, in einem einheitlichen optischen Erscheinungsbild dargestellt ist.

Die Erfindung betrifft auch ein Kochfeld mit einer erfindungsgemäßen Kochfeldplatten oder einer vorteilhaften Ausgestaltung davon.

Ein Ausführungsbeispiel der Erfindung wird nachfolgend anhand schematischer Zeichnungen näher erläutert. Es zeigen:
- Fig. 1: eine schematische perspektivische Ausgestaltung eines Ausführungsbeispiels eines erfindungsgemäßen Kochfelds;
- Fig. 2: eine schematische Schnittdarstellung durch ein Ausführungsbeispiel einer Kochfeldplatte des Kochfelds gemäß Fig.1; und
- Fig. 3: ein Diagramm, bei dem der Transmissionsgrad T und der Reflexionsgrad R der Kochfeldplatte in Abhängigkeit von der Wellenlänge dargestellt ist.

In den Figuren werden gleiche oder funktionsgleiche Elemente mit den gleichen Bezugszeichen versehen.

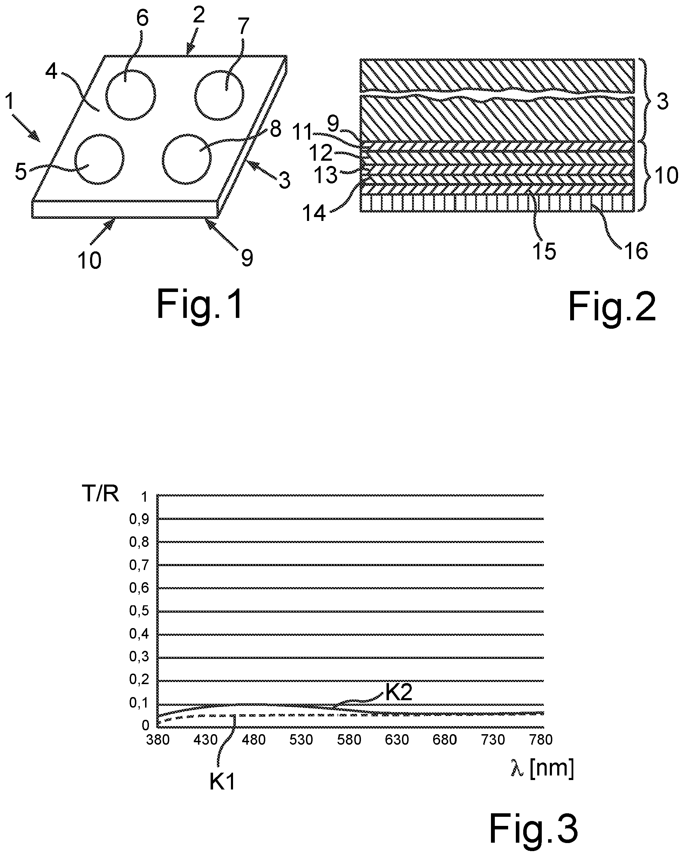

In Fig. 1 ist in einer schematischen und perspektivischen Ansicht ein Kochfeld 1 gezeigt, welches eine Kochfeldplatte 2 aufweist, die eine Grundplatte 3 aufweist, die aus Glas oder Glaskeramik ausgebildet ist. Auf einer Oberseite 4 der Grundplatte 3 sind in Anzahl und Position beispielhaft vier Kochzonen 5, 6, 7 und 8 gekennzeichnet. Auf einer Unterseite 9 der Grundplatte 3 ist eine in Fig. 1 nicht näher gezeigte Beschichtung 10 ausgebildet, die zumindest zwei metallische Schichten und zumindest zwei dielektrische Schichten sowie eine Antioxidations-Schutzschicht aufweist.

In Fig. 2 ist eine Schnittdarstellung durch die Kochfeldplatte 2 gemäß der Darstellung in Fig. 1 gezeigt. Die Dickenverhältnisse sind dabei nicht maßstabsgetreu und insbesondere ist die Grundplatte 3 wesentlich dicker als die gesamte Schichtdicke der Beschichtung 10. In der gezeigten Ausführung ist vorgesehen, dass die Beschichtung 10 eine direkt an die Unterseite 9 anschließende erste dielektrische Schicht 11 aufweist. Auf diese nach unten hin folgend ist eine erste metallische Schicht 12 ausgebildet. Auf diese wiederum nach unten folgend ist eine zweite dielektrische Schicht 13 ausgebildet. Auf diese wiederum folgend ist eine zweite metallische Schicht 14 ausgebildet. Nach unten hin ist dann eine dritte dielektrische Schicht 15 ausgebildet. Dieser Schichtverbund wird nach unten hin durch eine Schutzschicht, welche ein Antioxidations-Schutzschicht 16 ist, abgeschlossen.

Es kann auch vorgesehen sein, dass darüber hinaus weitere metallische Schichten und weitere dielektrische Schichten vorgesehen sind.

In spezifischer Ausgestaltung ist vorgesehen, dass die Beschichtung 10 eine erste dielektrische Schicht 11 aufweist, deren Material SnOₓ ist. Diese erste dielektrische Schicht 11 weist eine Schichtdicke von 46nm auf. Auf diese erste dielektrische Schicht folgend ist nach unten eine erste metallische Schicht 12 ausgebildet, deren Material SSt ist und deren Schichtdicke 8nm aufweist. Die zweite dielektrische Schicht 13 umfasst als Material SnOₓ und weist eine Schichtdicke von 56nm auf. Auf diese folgend ist eine zweite metallische Schicht mit dem Material SSt mit einer Schichtdicke von 33nm ausgebildet. Wiederum nach unten folgend ist eine dritte dielektrische Schicht 15 mit dem Material SnOₓ ausgebildet, wobei diese Schicht 15 eine Schichtdicke von 50nm aufweist. Nach unten hin abschließend ist dann die Antioxidations-Schutzschicht 16 ausgebildet.

In der Darstellung gemäß Fig. 3 ist gezeigt, dass der Transmissionsgrad T gemäß der Kurve K1 über den gesamten Wellenlängenbereich von 380nm bis 780nm <10%, insbesondere <7% ist. Darüber hinaus ist gemäß dem Diagramm in Fig. 3 zu erkennen, dass der Reflexionsgrad R gemäß der Kurve K2 ebenfalls über den gesamten Wellenlängenbereich von 380nm und 780nm <15% und insbesondere <11% ist.

### Bezugszeichenliste

- 1: Kochfeld
- 2: Kochfeldplatte
- 3: Grundplatte
- 4: Oberseite
- 5, 6, 7, 8: Kochzonen
- 9: Unterseite
- 10: Beschichtung
- 11: erste dielektrische Schicht
- 12: erste metallische Schicht
- 13: zweite dielektrische Schicht
- 14: zweite metallische Schicht
- 15: dritte dielektrische Schicht
- 16: Antioxidations-Schutzschicht
- K1, K2: Kurven
- T: Transmissonsgrad
- R: Reflexionsgrad

## Patentansprüche

1. Kochfeldplatte (2), mit einer Grundplatte (3), an deren Unterseite (9) eine Beschichtung (10) mit zumindest zwei metallischen Schichten (12, 14) und zumindest zwei dielektrischen Schichten (11, 13, 15) ausgebildet ist, **dadurch gekennzeichnet, dass** die Beschichtung (10) so ausgebildet ist, dass ein Reflexionsgrad (R) der Kochfeldplatte (2) kleiner 15% im Wellenlängenbereich zwischen 380 nm und 780 nm ist.

2. Kochfeldplatte (2) nach Anspruch 1, **dadurch gekennzeichnet, dass** der Reflexionsgrad (R) der Kochfeldplatte (2) im Wellenlängenbereich zwischen 380nm und kleiner 400nm und zwischen größer 530nm und 780nm kleiner 10% ist.

3. Kochfeldplatte (2) nach Anspruch 1 oder 2, **dadurch gekennzeichnet, dass** die Beschichtung (10) so ausgebildet ist, dass ein Transmissionsgrad (T) der Kochfeldplatte (2) im Wellenlängenbereich zwischen 380 nm und 780 nm kleiner 12%, insbesondere zwischen 0,5 % und 10 % ist.

4. Kochfeldplatte (2) nach einem der vorhergehenden Ansprüche, **dadurch gekennzeichnet, dass** die Anzahl der metallischen Schichten (12, 14) 2 oder 3 beträgt.

5. Kochfeldplatte (2) nach einem der vorhergehenden Ansprüche, **dadurch gekennzeichnet, dass** Anzahl der dielektrischen Schichten (11, 13, 15) zwischen 2 und 4 beträgt.

6. Kochfeldplatte (2) nach einem der vorhergehenden Ansprüche, **dadurch gekennzeichnet, dass** die Beschichtung (10) als unteren Abschluss mit einer Schutzschicht, insbesondere eine Antioxidations-Schutzschicht (16), ausgebildet ist.

7. Kochfeldplatte (2) nach einem der vorhergehenden Ansprüche, **dadurch gekennzeichnet, dass** die metallischen Schichten (12, 14) und die dielektrischen Schichten (11, 13, 15) jeweils Schichtdicken kleiner 100nm aufweisen.

8. Kochfeldplatte (2) nach Anspruch 7, **dadurch gekennzeichnet, dass** zumindest zwei metallische Schichten (12, 14) der Beschichtung (10) unterschiedliche Schichtdicken und/oder zumindest zwei dielektrische Schichten (11, 13, 15) der Beschichtung (10) unterschiedliche Schichtdicken aufweisen.

9. Kochfeldplatte (2) nach einem der vorhergehenden Ansprüche, **dadurch gekennzeichnet, dass** die Schichten (11 bis 16) der Beschichtung (10) durch Sputtern auf der Unterseite (9) ausgebildet sind, insbesondere durch ein Magnetronsputtern ausgebildet sind.

10. Kochfeldplatte (2) nach einem der vorhergehenden Ansprüche, **dadurch gekennzeichnet, dass** das Material einer metallischen Schicht (12, 14) SSt, Mo, Ni, Cr, Nb, V, Ti, Ta, W, Cu oder eine Verbindung von zumindest zwei der genannten Elemente aufweist.

11. Kochfeldplatte (2) nach einem der vorhergehenden Ansprüche, **dadurch gekennzeichnet, dass** das Material einer dielektrischen Schicht (11, 13, 15) SnOₓ, ZnOₓ, TiOₓ, AlOₓ, SiOₓ, NbOₓ, TaOₓ, SiNₓ, AlNₓ, TiNₓ, oder eine Verbindung von zumindest zwei der genannten Verbindungen aufweist.

12. Kochfeldplatte (2) nach einem der vorhergehenden Ansprüche, **dadurch gekennzeichnet, dass** die Beschichtung (10) eine erste dielektrische Schicht (11) mit SnOₓ mit einer Schichtdicke von 46nm aufweist, auf welche folgend zumindest eine erste metallische Schicht (12) mit SSt mit einer Schichtdicke von 8nm ausgebildet ist, auf welche folgend eine zweite dielektrische Schicht (13) mit SnOₓ mit einer Schichtdicke von 56nm ausgebildet ist, auf welche folgend zumindest eine zweite metallische Schicht (14) mit SSt mit einer Schichtdicke von 33nm ausgebildet ist, auf welche eine dritte dielektrische Schicht (15) mit SnOₓ mit einer Schichtdicke von 50 nm ausgebildet ist.

13. Kochfeldplatte (2) nach einem der vorhergehenden Ansprüche, **dadurch gekennzeichnet, dass** die Beschichtung (10) eine Schichtdicke zwischen 10nm und 500nm aufweist.

14. Kochfeldplatte (2) nach einem der vorhergehenden Ansprüche, **dadurch gekennzeichnet, dass** sie auf zumindest einer Oberfläche eine Bedruckung und/oder im Inneren eine, insbesondere mit Laserlicht erzeugte, Markierung aufweist.

15. Kochfeld (1) mit einer Kochfeldplatte (2) nach einem der vorhergehenden Ansprüche.

## Claims

1. Hot plate (2), with a base plate (3), on the underside (9) of which is embodied a coating (10) with at least two metallic layers (12, 14) and at least two dielectric layers (11, 13, 15), **characterised in that** the coating (10) is embodied in such a way that a reflectivity (R) of the hot plate (2) is lower than 15% in the wavelength range between 380 nm and 780 nm.

2. Hot plate (2) according to claim 1, **characterised in that** the reflectivity (R) of the hot plate (2) is less than 10% in the wavelength range between 380nm and less than 400nm and between greater than 530nm and 780nm.

3. Hot plate (2) according to claim 1 or 2, **characterised in that** the coating (10) is embodied in such a way that a transmittance (T) of the hot plate (2) in the wavelength range between 380 nm and 780 nm is smaller than 12%, in particular between 0.5 % and 10 %.

4. Hot plate (2) according to one of the preceding claims, **characterised in that** the number of metallic layers (12, 14) is 2 or 3.

5. Hot plate (2) according to one of the preceding claims, **characterised in that** the number of dielectric layers (11, 13, 15) is between 2 and 4.

6. Hot plate (2) according to one of the preceding claims, **characterised in that** the coating (10) is embodied as the bottom finish with a protective layer, in particular a protective antioxidation layer (16).

7. Hot plate (2) according to one of the preceding claims, **characterised in that** the metallic layers (12, 14) and the dielectric layers (11, 13, 15) in each case have layer thicknesses of less than 100nm.

8. Hot plate (2) according to claim 7, **characterised in that** at least two metallic layers (12, 14) of the coating (10) have different layer thicknesses and/or at least two dielectric layers (11, 13, 15) of the coating (10) have different layer thicknesses.

9. Hot plate (2) according to one of the preceding claims, **characterised in that** the layers (11 to 16) of the coating (10) are embodied by means of sputtering on the underside (9), in particular by means of magnetron sputtering.

10. Hot plate (2) according to one of the preceding claims, **characterised in that** the material of a metallic layer (12, 14) comprises SSt, Mo, Ni, Cr, Nb, V, Ti, Ta, W, Cu or a compound of at least two of the cited elements.

11. Hot plate (2) according to one of the preceding claims, **characterised in that** the material of a dielectric layer (11, 13, 15) comprises SnOₓ, ZnOₓ, TiOₓ, Al0ₓ, SiOₓ, NbOₓ, TaOₓ, SiNₓ, AINₓ, TiNₓ, or a linkage of at least two of the cited compounds.

12. Hot plate (2) according to one of the preceding claims, **characterised in that** the coating (10) comprises a first dielectric layer (11) with SnOₓ with a layer thickness of 46nm, on which is subsequently embodied at least one first metallic layer (12) with SSt and a layer thickness of 8nm, on which a second dielectric layer (13) with SnOₓ and a layer thickness of 56nm is then embodied, on which at least one second metallic layer (14) with SSt and with a layer thickness of 33nm is embodied, on which is embodied a third dielectric layer (15) with SnOₓ, and with a layer thickness of 50 nm.

13. Hot plate (2) according to one of the preceding claims, **characterised in that** the coating (10) has a layer thickness of between 10nm und 500nm.

14. Hot plate (2) according to one of the preceding claims, **characterised in that** it has an imprint and/or internally, a marking created in particular using laser light, on least one surface.

15. Cooktop (1) with a hot plate (2) according to one of the preceding claims.

## Revendications

1. Table de cuisson (2) avec une plaque de base (3) sur le dessous (9) de laquelle un revêtement (10) avec au moins deux couches métalliques (12, 14) et au moins deux couches diélectriques (11, 13, 15) est exécuté, **caractérisée en ce que** le revêtement (10) est exécuté de telle sorte qu'un degré de réflexion (R) de la table de cuisson (2) est inférieur à 15 % dans l'intervalle de longueur d'onde entre 380 nm et 780 nm .

2. Table de cuisson (2) selon la revendication 1, **caractérisée en ce que** le degré de réflexion (R) de la table de cuisson (2) est inférieur à 10 % dans l'intervalle de longueur d'onde situé entre 380 nm et moins de 400 nm et entre plus de 530 nm et 780 nm.

3. Table de cuisson (2) selon la revendication 1 ou 2, **caractérisée en ce que** le revêtement (10) est exécuté de telle sorte qu'un degré de transmission (T) de la table de cuisson (2) est inférieur à 12 %, en particulier entre 0,5 % et 10 % dans l'intervalle de longueur d'onde entre 380 nm et 780 nm.

4. Table de cuisson (2) selon l'une des revendications précédentes, **caractérisée en ce que** le nombre de couches métalliques (12, 14) est de 2 ou 3.

5. Table de cuisson (2) selon l'une des revendications précédentes, **caractérisée en ce que** le nombre de couches diélectriques (11, 13, 15) se situe entre 2 et 4.

6. Table de cuisson (2) selon l'une des revendications précédentes, **caractérisée en ce que** le revêtement (10) est exécuté sous forme de parachèvement inférieur avec une couche de protection, en particulier une couche de protection anti-oxydation (16).

7. Table de cuisson (2) selon l'une des revendications précédentes, **caractérisée en ce que** les couches métalliques (12, 14) et les couches diélectriques (11, 13, 15) présentent respectivement des épaisseurs de couches inférieures à 100 nm.

8. Table de cuisson (2) selon la revendication 7, **caractérisée en ce qu'**au moins deux couches métalliques (12, 14) du revêtement (10) présentent des épaisseurs de couches différentes et/ou au moins deux couches diélectriques (11, 13, 15) du revêtement (10) présentent des épaisseurs de couches différentes.

9. Table de cuisson (2) selon l'une des revendications précédentes, **caractérisée en ce que** les couches (11 à 16) du revêtement (10) sont exécutées par pulvérisation sur le dessous (9), en particulier par une pulvérisation au magnétron.

10. Table de cuisson (2) selon l'une des revendications précédentes, **caractérisée en ce que** le matériau d'une couche métallique (12, 14) présente du SSt, Mo, Ni, Cr, Nb, V, Ti, Ta, W, Cu ou un alliage d'au moins deux des éléments mentionnés.

11. Table de cuisson (2) selon l'une des revendications précédentes, **caractérisée en ce que** le matériau d'une couche diélectrique (11, 13, 15) présente du SnOₓ, ZnOₓ, TiOₓ, AlOₓ, SiOₓ, NbOₓ, TaOₓ, SiNₓ, AlNₓ, TiNₓ ou un alliage d'au moins deux des composés mentionnés.

12. Table de cuisson (2) selon l'une des revendications précédentes, **caractérisée en ce que** le revêtement (10) présente une première couche diélectrique (11) au SnOₓ d'une épaisseur de couche de 46 nm, sur laquelle est exécutée au moins une première couche métallique (12) au SSt d'une épaisseur de couche de 8 nm, sur laquelle est exécutée une deuxième couche diélectrique (13) au SnOₓ d'une épaisseur de couche de 56 nm, sur laquelle est exécutée au moins une deuxième couche métallique (14) au SSt d'une épaisseur de couche de 33 nm, sur laquelle est exécutée une troisième couche diélectrique (15) au SnOₓ d'une épaisseur de couche de 50 nm.

13. Table de cuisson (2) selon l'une des revendications précédentes, **caractérisée en ce que** le revêtement (10) présente une épaisseur de couche entre 10 nm et 500 nm.

14. Table de cuisson (2) selon l'une des revendications précédentes, **caractérisée en ce qu'**elle présente sur au moins une surface une impression et/ou à l'intérieur un marquage, en particulier généré par lumière laser.

15. Champ de cuisson (1) avec une table de cuisson (2) selon l'une des revendications précédentes.
